# EUROPEAN PATENT APPLICATION

(11) **EP 4 668 302 A1**
(43) Date of publication of application: **24.12.2025**
(21) Application number: 25173239.2
(22) Date of filing: 29.04.2025
(51) Int. Cl.: H01G 4/08, H01G 4/06, H01G 4/12, H01G 4/30

(54) **MULTILAYER ELECTRONIC COMPONENT AND METHOD OF MANUFACTURING THE SAME**

(30) Priority: 17.06.2024 KR 20240078236; 04.09.2024 KR 20240120119
(71) Applicant: Samsung Electro-Mechanics Co., Ltd., Gyeonggi-do (KR)
(72) Inventor: Yoon, Seok Hyun, Suwon-si, Gyeonggi-do (KR); Kwon, Hyung Soon, Suwon-si, Gyeonggi-do (KR); Jung, Han Seong, Suwon-si, Gyeonggi-do (KR); Kim, Hyoung Uk, Suwon-si, Gyeonggi-do (KR); Yun, Byung Kil, Suwon-si, Gyeonggi-do (KR)
(74) Representative: Grünecker Patent- und Rechtsanwälte PartG mbB

(57) **Abstract**

A multilayer electronic component includes a body including a dielectric layer and internal electrodes; and external electrodes disposed on the body and connected to the internal electrodes, wherein the dielectric layer includes a first grain and a second grain each including a first component represented as (Ca₁₋ₓSrₓ) (Zr_{1-y}Ti_{y})O₃ (0 ≤ x ≤ 1.0), wherein the first component included in the first grain satisfies 0 ≤ y ≤ 0.050, and wherein the first component included in the second grain satisfies 1 ≥ y ≥ 0.600.

## Description

### CROSS-REFERENCE TO RELATED APPLICATION(S)

This application claims the benefit of priority to Korean Patent Application No. 10-2024-0120119 filed on September 4, 2024 and Korean Patent Application No. 10-2024-0078236 filed on June 17, 2024 in the Korean Intellectual Property Office, the disclosures of which are incorporated herein by reference in their entirety.

### TECHNICAL FIELD

The present disclosure relates to a multilayer electronic component and a method of manufacturing the same.

### BACKGROUND

A multilayer ceramic capacitor (MLCC), a multilayer electronic component, may be a chip-type condenser mounted on a printed circuit board of various electronic products such as a liquid crystal display (LCD) and a plasma display panel (PDP), a computer, a smartphone, an infotainment system, an automobile system and charging or discharging electricity.

When a dielectric layer of a multilayer electronic component is formed using BaTiO₃ material or a ferroelectric material such as (Ba₁₋ₓCₐₓ)(Ti_{1-y}Ca_{y})O₃, (Ba₁₋ₓCaₓ)(Ti_{1-y}Zr_{y})O₃, Ba(Ti_{1-y}Zr_{y})O₃ in which Ca and Zr is partially solid-solved, a high dielectric constant at room temperature and a relatively small dissipation factor (DF) may be implemented.

However, as dielectric grain size decreases, a dielectric constant of a ferroelectric material may decrease, and aging properties in which the dielectric constant decreases over time may be implemented. In this case, it may be difficult to be used as a high-temperature capacitor at 150 °C or higher due to a large change in dielectric constant depending on temperature change.

Also, as capacitance of a capacitor increases due to a reduced thickness, the effective capacitance decrease under the same DC voltage may also increase accordingly.

To address the above issue, a paraelectric material of which a dielectric constant does not change according to a DC electric field may be applied.

A dielectric material having excellent DC-bias properties may have relatively strong durability in an electrostatic discharge (ESD) environment, and may also have reduced acoustic noise, such that the material may be usefully applied to capacitor products requiring such properties.

In patent document 1 described below, a multilayer ceramic capacitor and a method of manufacturing the same are disclosed, which may implement high-capacitance properties by adjusting a Ti content in a dielectric magnetic composition including (Ca₁₋ₓSrₓ)(Zr_{1-y}Ti_{y})O₃ (0 ≤ x ≤ 1, 0.3 ≤ y ≤ 0.8) as a main component, thereby having a relatively small dissipation factor (DF) and excellent insulation resistance properties.

However, in patent document 1, the Ti content may be adjusted in a single component, and since a plurality of grains forming the dielectric layer may have a substantially single composition, there may be limitations in further improving withstand voltage properties and reliability under the condition in which the same dielectric constant is implemented.

Also, in patent document 1, in order to implement 10 kinds of dielectric constants, 10 types of CSZT powders having different Ti content y in (Ca₁₋ₓSrₓ)(Zr_{1-y}Ti_{y})O₃ may need to be mixed, which may cause difficulty in the manufacturing process.

Accordingly, it may be necessary to improve a multilayer electronic component and a method of manufacturing the multilayer electronic component including a dielectric layer, which may further improve reliability and high-temperature withstand voltage properties as compared to a dielectric layer including a dielectric layer having dielectric grains having a substantially single composition of (Ca₁₋ₓSrₓ)(Zr_{1-y}Ti_{y})O₃ (0 ≤ x ≤ 1, 0.3 ≤ y ≤ 0.8).

### [Prior Art Document]

### [Patent Document]

Patent Document 1: JP-2017-014094 A

### SUMMARY

An embodiment of the present disclosure is to assure insulating properties and high-temperature withstand voltage properties of a multilayer electronic components including CSZT as a component of a dielectric layer.

An embodiment of the present disclosure is to assure C0G properties of a multilayer electronic component including CSZT as a component of a dielectric layer.

According to an embodiment of the present disclosure, a multilayer electronic component includes a body including a dielectric layer and internal electrodes; and external electrodes disposed on the body and connected to the internal electrodes, wherein the dielectric layer includes a first grain and a second grain each including a first component represented as (Ca₁₋ₓSrₓ) (Zr_{1-y}Ti_{y})O₃ (0 ≤ x ≤ 1.0), wherein the first component included in the first grain satisfies 0 ≤ y ≤ 0.050, and wherein the first component included in the second grain satisfies 1 ≥ y ≥ 0.600.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is a cross-sectional diagram taken along line I-I' in FIG. 1;
FIG. 3 is a cross-sectional diagram taken along line II-II' in FIG. 1;
FIG. 4 is a diagram illustrating grains of a dielectric layer according to a comparative example;
FIG. 5 is a diagram illustrating grains of a dielectric layer according to an embodiment of the present disclosure;
FIG. 6 is an enlarged diagram illustrating region A in FIG. 3;
FIG. 7 is an image of region A in FIG. 3 captured using a scanning transmission electron microscope (STEM);
FIG. 8 is an image of Zr element mapping by STEM-EDS analysis of region A in FIG. 3;
FIG. 9 is an image of overlapping the image according to FIG. 7 and the image according to FIG. 8;
FIG. 10 is an image of a second grain selected from the image according to FIG. 7; and

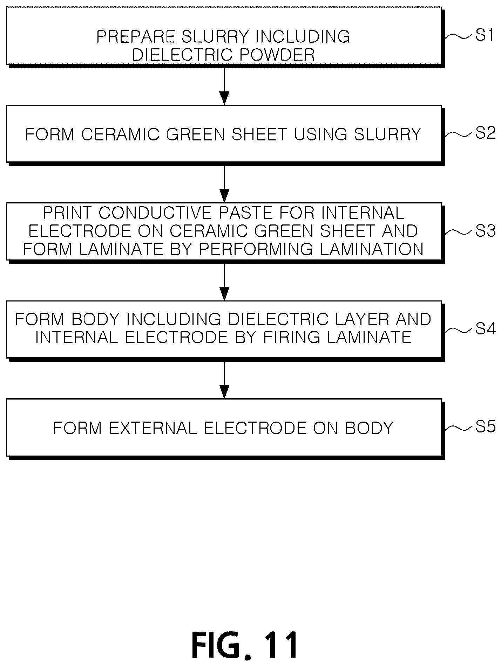

FIG. 11 is a flowchart illustrating a method of manufacturing a multilayer electronic component according to an embodiment of the present disclosure.

### DETAILED DESCRIPTION

Hereinafter, embodiments of the present disclosure will be described below with reference to the accompanying drawings.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after a gaining an understanding of the disclosure of this application.

In the drawings, same elements will be indicated by the same reference numerals. Also, redundant descriptions and detailed descriptions of known functions and elements which may unnecessarily render the gist of the present disclosure obscure will not be provided. In the accompanying drawings, some elements may be exaggerated, omitted or briefly illustrated, and the sizes of the elements may not necessarily reflect the actual sizes of these elements. The terms, "include," "comprise," "is configured to," or the like of the description are used to indicate the presence of features, numbers, steps, operations, elements, portions or combination thereof, and may not exclude the possibilities of combination or addition of one or more features, numbers, steps, operations, elements, portions or combination thereof.

In the drawings, a first direction may be defined as a direction in which first and second internal electrodes are alternately disposed with a dielectric layer interposed therebetween or a thickness T direction, among second and third directions perpendicular to the first direction, a second direction may be defined as a length L direction, and a third direction may be defined as a width W direction.

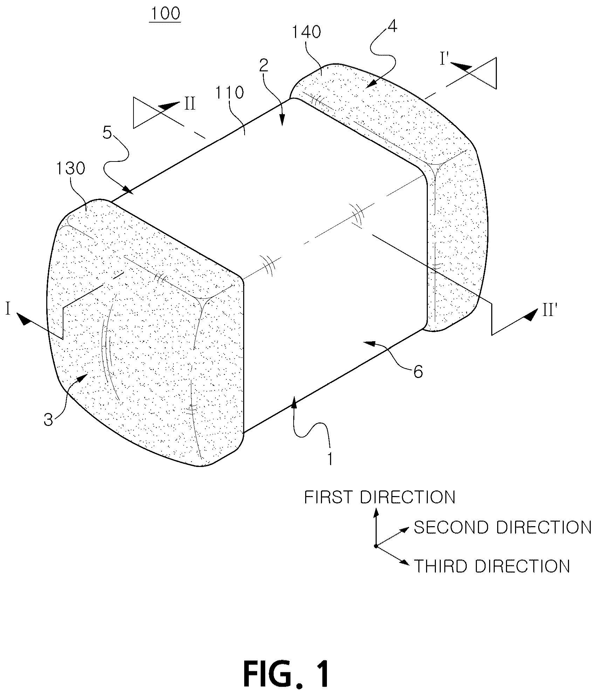

FIG. 1 is a perspective diagram illustrating a multilayer electronic component according to an embodiment of the present disclosure.

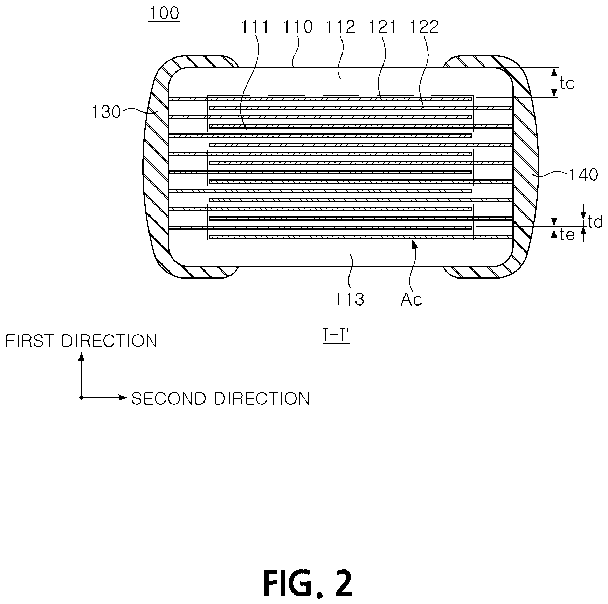

FIG. 2 is a cross-sectional diagram taken along line I-I' in FIG. 1.

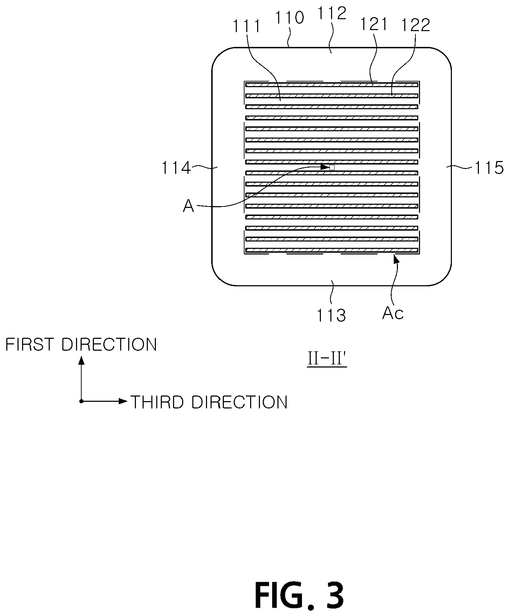

FIG. 3 is a cross-sectional diagram taken along line II-II' in FIG. 1.

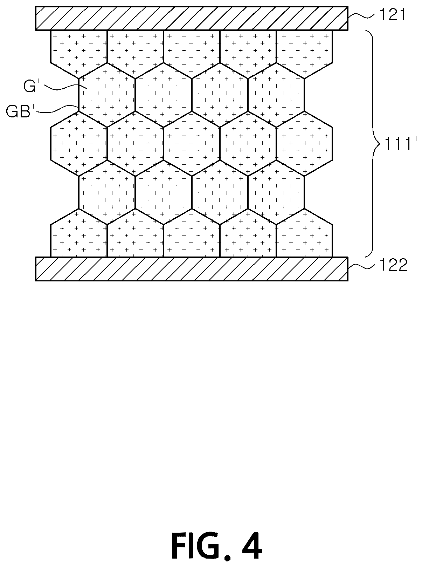

FIG. 4 is a diagram illustrating grains of a dielectric layer according to a comparative example.

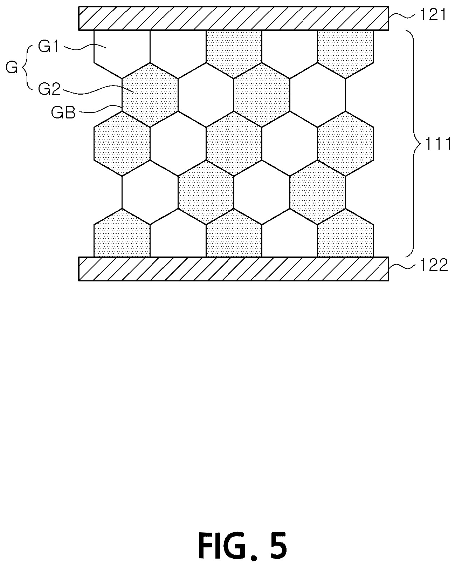

FIG. 5 is a diagram illustrating grains of a dielectric layer according to an embodiment.

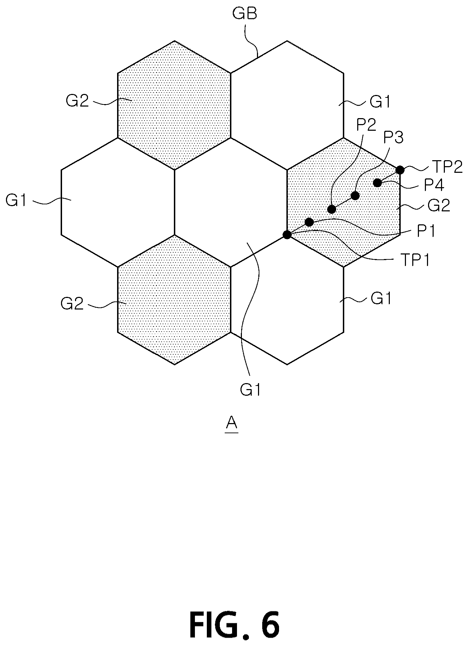

FIG. 6 is an enlarged diagram illustrating region A in FIG. 3.

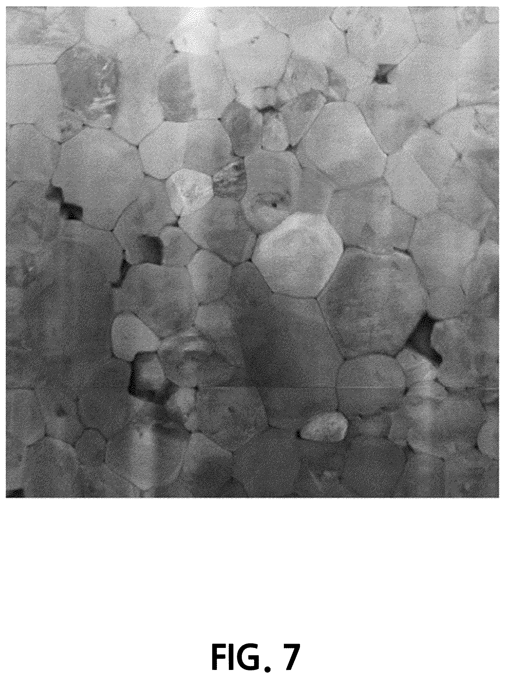

FIG. 7 is an image of region A in FIG. 3 taken using a scanning transmission electron microscope (STEM);

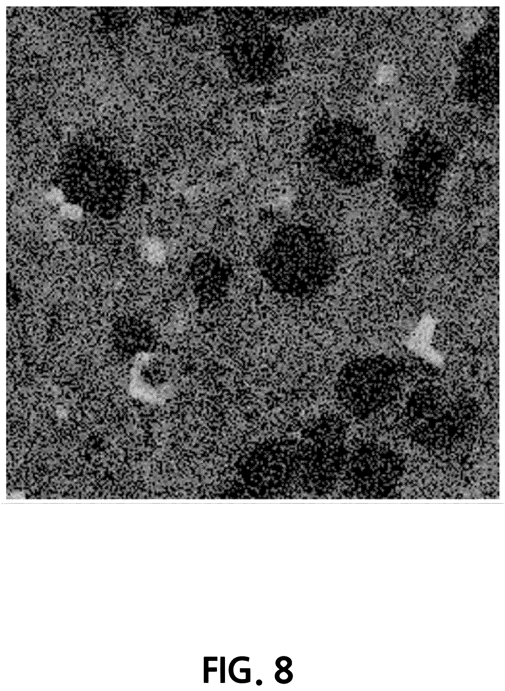

FIG. 8 is an image of Zr element mapping by STEM-EDS analysis of region A in FIG. 3;

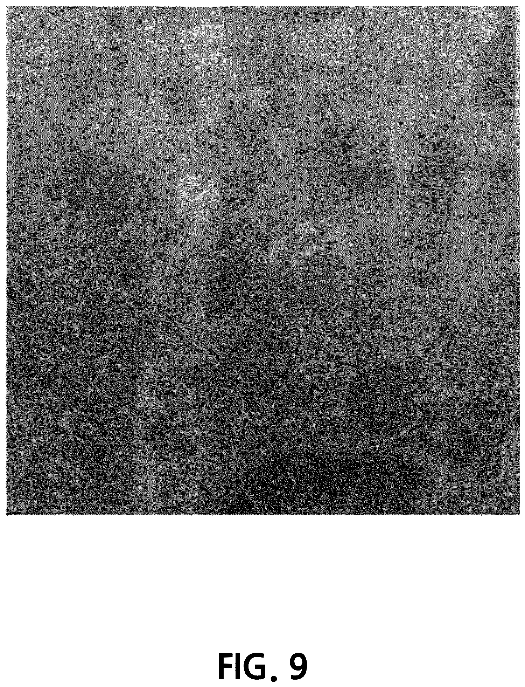

FIG. 9 is an image of overlapping the image according to FIG. 7 and the image according to FIG. 8;

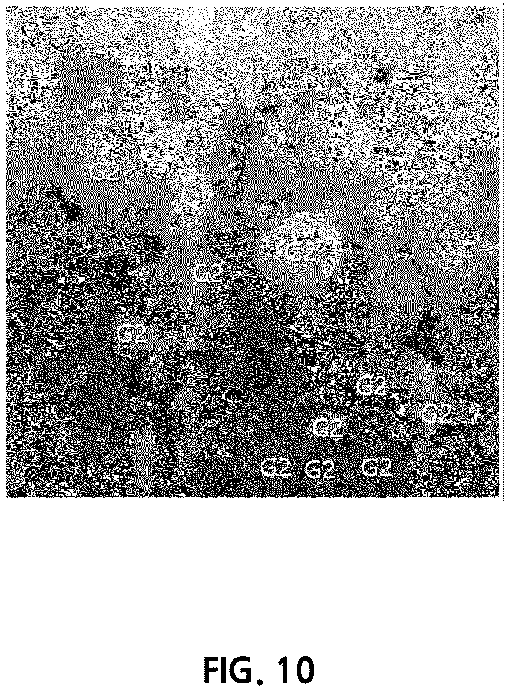

FIG. 10 is an image of a second grain selected from the image according to FIG. 7

Hereinafter, a multilayer electronic component 100 according to an embodiment will be described with reference to FIGS. 1 to 10.

A multilayer electronic component 100 according to an embodiment may include a body including a dielectric layer and internal electrodes; and external electrodes disposed on the body and connected to the internal electrodes, and the dielectric layer may include a first grain and a second grain including a first component represented as (Ca₁₋ₓSrₓ) (Zr_{1-y}Ti_{y})O₃ (0 ≤ x ≤ 1.0), a first component included in the first grain may satisfy 0 ≤ y ≤ 0.050, and a first component included in the second grain may satisfy 1 ≥ y ≥ 0.600.

The body 110 may include the dielectric layer 111 and the internal electrodes 121 and 122 alternately disposed with the dielectric layer 111.

The shape of the body 110 may not be limited to any particular shape, but as illustrated in FIGS. 1 to 3, the body 110 may have a hexahedral shape or a shape similar to a hexahedral shape. Due to reduction of a ceramic material included in the body 110 during a firing process or polishing of corners, the body 110 may not have an exactly hexahedral shape formed by linear lines but may have a substantially hexahedral shape.

The body 110 may have first and second surfaces 1 and 2 opposing each other in a first direction, third and fourth surfaces 3 and 4 connected to the first and second surfaces 1 and 2 and opposing in a second direction, and fifth and sixth surfaces 5 and 6 connected to the first and second surfaces 1 and 2 and the third and fourth surfaces 3 and 4 and opposing each other in a third direction.

The plurality of dielectric layers 111 forming the body 110 may be in a fired state, and boundaries between adjacent dielectric layers 111 may be integrated with each other such that the boundaries may not be distinct without using a scanning electron microscope (SEM).

The material forming the dielectric layer 111 may be varied depending on a purpose thereof. The dielectric layer 111 according to an embodiment may be formed using one or more of CaCO₃, SrCO₃, ZrO₂ and TiO₂ as a starting material. Accordingly, the dielectric layer 111 may have a composition represented as (Ca₁₋ₓSrₓ) (Zr_{1-y}Ti_{y})O₃ (0 ≤ x ≤ 1.0) as a first component.

Also, various additives, organic solvents, binders, dispersants, or the like, may be added to the dielectric layer 111 depending on the purpose of the embodiment.

In the embodiment, the "first component" may indicate a main component occupying a content greater than that of each of the other additives, organic solvents, binders and dispersants, but an embodiment thereof is not limited thereto.

As illustrated in FIGS. 3 and 6, the dielectric layer 111 according to an embodiment may include a first grain G1, a second grain G2, and a grain boundary GB. Since the dielectric layer 111 may have a composition represented as the first component, the first grain G1 and the second grain G2 may also include a first component represented as (Ca₁₋ₓSrₓ) (Zr_{1-y}Ti_{y})O₃ (0 ≤ x ≤ 1.0). However, in an embodiment, the y value, which may be a Ti content of the first component of each of the first grain G1 and the second grain G2, may be different.

In patent document 1, the dielectric layer of the multilayer electronic component is expected to include grains having a substantially single composition after firing, such that there may be limitations in simultaneously assuring withstand voltage properties and reliability at relatively high temperature under the condition in which the same dielectric constant is implemented.

Also, in patent document 1, CSZT powders having different compositions may need to be used to implement various dielectric constants, such that there may be difficulties in the manufacturing process.

FIG. 4 illustrates a grain structure of the dielectric layer 111' after firing in patent document 1, and in the present disclosure, the dielectric layer 111' may be defined as a grain of the dielectric layer according to the comparative example.

Referring to FIG. 4, the dielectric layer 111' according to the comparative example may be disposed between internal electrodes 121 and 122 and may include a grain G' and a grain boundary GB'.

In patent document 1, the dielectric layer 111 may include (Ca₁₋ₓSrₓ) (Zr_{1-y}Ti_{y})O₃ (0 ≤ x ≤ 1.0) as the main component, and by adjusting a ratio or the y value of Zr/Ti to be between 0.3 or more and 0.8, a high dielectric constant of 90 or more may be implemented.

In the dielectric layer 111' according to the comparative example, the grain G' may be formed according to a composition ratio of a main component of a base material according to each experimental example of each patent document 1, such that the layer may have a relatively single composition. Accordingly, in patent document 1 including the dielectric layer according to the comparative example, there may be limitations in simultaneously assuring withstand voltage properties and reliability at relatively high temperatures under the condition in which the same dielectric constant is implemented.

Referring to FIG. 5, a dielectric layer 111 according to an embodiment may include a first grain G1 and a second grain G2 having different Zr/Ti ratios or y values. Specifically, the first grain G1 may have a Zr-rich CSZT composition having a relatively lower Ti fraction than that of the second grain G2, and the second grain G2 may have a Ti-rich CSZT composition having a Ti fraction relatively higher than that of the first grain. In this case, as the first grain (Zr-rich CSZT) having excellent withstand voltage and reliability is distributed in a form of surrounding the second grain (Ti-rich CSZT) having excellent dielectric constant, a further improvement in withstand voltage and reliability properties may be assured than in the case of having grains of a single CSZT composition.

That is, by including the second grain G2 having a single CSZT composition grain, the multilayer electronic component 100 according to an embodiment may obtain a higher high-temperature withstand voltage and improved reliability effect than the case in which the dielectric layer 111 includes the first grain G1 having a Zr-rich CSZT composition and the second grain G2 having a Ti-rich CSZT composition.

The second grain G2 according to an embodiment may satisfy the Ti fraction y of 1 ≥ y ≥ 0.600. Accordingly, the first grain G2 and the second grain G2 may be distinct from each other.

The Ti fraction y of the first component included in the first grain G1 in an embodiment may satisfy the condition 0 ≤ y ≤ 0.050. Accordingly, in a multilayer electronic component including a composite of grains including the first grain G1 and the second grain G2 in a dielectric layer, a minimum condition for implementing C0G properties satisfying a capacitance change rate (TCC) of in a range from -30 ppm/°C to +30 ppm/°C in an operating temperature range of -55 °C to 125 °C may be assured.

The method for measuring the Ti fraction of the first component included in each of the first grain G1 and second grain G2 may not be limited to any particular example.

First, in the cross-sections in the first and third direction, polished to the center in the second direction of the multilayer electronic component 100, an enlarged image of a 30 µm X 30 µm region of the dielectric layer 111 positioned at a center of the capacitance formation portion as in FIG. 7 may be obtained using a scanning transmission electron microscope (STEM).

Thereafter, as illustrated in FIG. 6, the Ti content in a single grain may be measured through scanning transmission electron microscopy-Energy-dispersive X-ray spectroscopy (STEM-EDS) analysis. Specifically, points P1, P2, P3, and P4, obtained by dividing the line segment connecting an arbitrary triple point TP1 of a grain and another triple point TP2 which is the farthest from the arbitrary triple point TP1 into five equal portions, may be determined. Ti content (relative to Zr) at each of the points P1 to P4 may be measured. The average value may then be obtained, thereby measuring y, which is the Ti fraction relative to Zr in a grain.

Since the second grain G2 has a Ti-rich CSZT composition, the room-temperature dielectric constant may increase as the area fraction of the second grain G2 increases. However, as the area fraction of the second grain G2 increases, the area fraction of the first grain G1 having the Zr-rich CSZT composition may decrease, such that it may be difficult to assure the temperature-dependent capacitance change rate properties and the high-temperature withstand voltage properties.

Specifically, when the ratio of the second grain G2 to a total area of the first grain G1 and the second grain G2 exceeds 0.828, it may be difficult to assure sufficient high-temperature withstand voltage properties. Accordingly, in an embodiment, by adjusting the ratio of the second grain G2 to the total area of the first grain G1 and the second grain G2 to be 0.828 or less, a room-temperature dielectric constant in a range from 30 to 200 and a high-temperature (200 °C) withstand voltage properties of 50 V/µm or more may be implemented.

When the ratio of the second grain G2 to the total area of the first grain G1 and the second grain G2 is adjusted to be 0.045 or less, C0G properties satisfying the capacitance change rate of -30 ppm/°C to +30 ppm/°C in the operating temperature range of -55 °C to 125 °C may also be assured.

The method of measuring the ratio of the area of the second grain G2 to the total area of the first grain G1 and the second grain G2 may not be limited to particular example.

A grain having a Ti fraction of 0.050 or less may be defined as the first grain G1, and a grain having a Ti fraction of 0.600 or more may be defined as the second grain G2. For about 100 grains, the first grain G1 and second grain G2 may be distinguished by the difference in intensity color of the Ti element or Zr element through scanning transmission electron microscopy-energy-dispersive X-ray spectroscopy (STEM-EDS) mapping, and the area ratio of the grains may be calculated.

Specifically, an image of a 30 µm X 30 µm region of the dielectric layer positioned at a central portion of the capacitance formation portion of the cross-sections in the first and third directions, polished to the center in the second direction of the multilayer electronic component 100 as illustrated in FIG. 7 using a scanning transmission electron microscope (STEM), and as illustrated in FIG. 8, distribution of Zr elements may be mapped through energy-dispersive X-ray spectroscopy (EDS) analysis.

Thereafter, by overlapping FIGS. 7 and 8 as in FIGS. 9 and 10 using an image processing program such as the Image J program, a grain having a concentration of Zr may be distinguished as a first grain having a low Ti content, and a grain having a low concentration of Zr may be distinguished as a second grain having a high Ti content, and the area ratio of the grains may be calculated.

In the embodiment, the ratio of the area of the second grain G2 to the total area of the first grain G1 and the second grain G2 may be measured in the region positioned in the central portion of the capacitance formation portion Ac in cross-sections the first and third directions of the multilayer electronic component 100, but an embodiment thereof is not limited thereto, and measurement may also be performed in the cross-section in the first and second direction polished to the third direction center, and the measurement may be performed in the same manner in the region of the dielectric layer 111 positioned at the central portion of the capacitance formation portion Ac, and also in other regions of the dielectric layer 111 positioned at the upper, lower, or left and right sides.

In an embodiment, in the first component of the dielectric layer 111, Sr may not be an element necessarily included, and accordingly, the fraction x of Sr in the first component may be 0.

In addition to the first component represented as (Ca₁₋ₓSrₓ) (Zr_{1-y}Ti_{y})O₃ (0 ≤ x ≤ 1.0), the dielectric layer 111 may include various additives.

In an embodiment, the dielectric layer 111 may include a first additive element which may be a valence variable acceptor element.

The valence variable acceptor element may be one or more of Mn, V, Cr, Fe, Ni, Co, Cu and Zn, and the first additive element may lower the firing temperature and may improve a high-temperature withstand voltage of the multilayer electronic component 100.

When the content of the first additive element is less than 0.20 moles based on 100 moles of the first component, a high-temperature (200 °C) withstand voltage properties may be lowered, and when the content of the first additive element exceeds 4.00 moles based on 100 moles of the first component, a secondary phase may be formed, such that the high-temperature (200 °C) withstand voltage properties may be lowered again.

Accordingly, the content of the first additive element according to an embodiment may be 0.20 moles or more and 4.00 moles or less based on 100 moles of the first component.

In an embodiment, the dielectric layer 111 may include a second additive element which may be a rare earth element.

The rare earth element may be one or more of Y, Dy, Ho, La, Ce, Nd, Sm, Gd, Er, Tb and Yb, and the second additive element may prevent degradation of reliability of the multilayer electronic component 100, may implement a sufficient dielectric constant, and may improve the high-temperature (200 °C) withstand voltage properties.

When the content of the second additive element exceeds 4.00 moles based on 100 moles of the first component, a secondary phase may be formed such that the high-temperature (200 °C) withstand voltage properties may be lowered. Accordingly, the content of the second additive element may be 4.00 moles or less based on 100 moles of the first component. A lower limit of the content of the second additive element is not limited to any particular example. That is, the content of the second additive element may be 0 moles or more based on 100 moles of the first component. In particular, the second additive element may not be included in the dielectric layer 111 when the room-temperature dielectric constant and the high-temperature (200 °C) withstand voltage properties of the multilayer electronic component 100 may be sufficiently improved in embodiments.

In an embodiment, the dielectric layer 111 may include Si as a third additive element.

Si may be added to a dielectric composition forming the dielectric layer 111 in the form of an oxide, carbonate, or glass and may lower a sintering temperature of the dielectric layer 111 or to facilitate sintering properties.

When the content of the third additive element is less than 1.00 moles based on 100 moles of the first component, density of the dielectric layer may be lowered, such that the high-temperature (200 °C) withstand voltage properties may be lowered, and when the content of the third additive element exceeds 4.00 moles based on 100 moles of the first component, the high-temperature (200 °C) withstand voltage properties may be lowered due to a secondary phase.

Accordingly, the content of the third additive element according to an embodiment may be 1.00 moles or more and 4.00 moles or less based on 100 moles of the first component.

The average thickness td of the dielectric layer 111 may not be limited to any particular example.

For miniaturization and high capacitance of the multilayer electronic component 100, the average thickness td of the dielectric layer 111 may be 0.35 µm or less, and to ensure reliability of the multilayer electronic component 100 under high temperature and high voltage, the average thickness td of the dielectric layer 111 may be 3.0 µm or more.

The average thickness td of the dielectric layer 111 may refer to the average size of the dielectric layer 111 disposed between the first and second internal electrodes 121 and 122.

The average thickness of the dielectric layer 111 may be measured by scanning the cross-section in the length and thickness (L-T) of the body 110 using a scanning transmission electron microscope (STEM) at 10,000x magnification. More specifically, the thickness of a dielectric layer may be measured at 30 points at an equal distance in the longitudinal direction in the scanned image, and the average value may be measured. The 30 points at an equal distance may be designated in the capacitance formation portion Ac. Also, when the measurement of the average value is extended to 10 dielectric layers and the average value is measured, the average thickness of the dielectric layer may be further generalized.

The body 110 may include a capacitance forming portion Ac disposed in the body 110 and forming capacitance including the first internal electrode 121 and the second internal electrode 122 alternately disposed with the dielectric layer 111 interposed therebetween.

Also, the capacitance forming portion Ac may contribute to capacitance formation of a capacitor, and may be formed by repeatedly laminating the plurality of first and second internal electrodes 121 and 122 with the dielectric layer 111 interposed therebetween.

Referring back to FIG. 2, cover portions 112 and 113 may be disposed on one surface and the other surface of the first direction of the capacitance formation portion Ac. The cover portions 112 and 113 may be formed by laminating a single dielectric layer or two or more dielectric layers on the upper and lower surfaces of the capacitance formation portion Ac in the thickness direction, respectively, and may basically prevent damages to the internal electrode due to physical or chemical stress.

The cover portions 112 and 113 may not include the internal electrode and may include the same material as that of the dielectric layer 111. That is, the cover portions 112 and 113 may include a ceramic material, for example, the same ceramic material as the dielectric layer 11.

The average thickness tc of the cover portions 112 and 113 may not be limited to any particular example. However, to more easily implement miniaturization and high capacity of the multilayer electronic component, the average thickness tc of the cover portions 112 and 113 may be 15 µm or less.

The average thickness tc of the cover portions 112 and 113 may indicate the size in the first direction, and may be an average value of the sizes in the first direction of the cover portions 112 and 113 measured at five points at an equal distance on the upper portion or the lower portion of the capacitance formation portion Ac.

Referring to FIG. 3, margin portions 114 and 115 may be disposed on one surface and the other surface of the third direction of the capacitance formation portion Ac.

The margin portions 114 and 115 may include the margin portions 114 disposed on the fifth surface 5 of the body 110 and the margin portions 115 disposed on the sixth surface 6. That is, the margin portions 114 and 115 may be disposed on both side surfaces in the width direction of the ceramic body 110.

As illustrated in FIG. 3, the margin portions 114 and 115 may indicate a region between both ends of the first and second internal electrodes 121 and 122 and the boundary surface of the body 110 in a cross-section of the body 110 taken in the width-thickness (W-T) direction.

The margin portions 114 and 115 may prevent damages to the internal electrode due to physical or chemical stress.

The margin portions 114 and 115 may be formed by forming internal electrodes by applying a conductive paste on the ceramic green sheet other than the region in which the margin portions are formed.

Also, to prevent a step difference due to the internal electrodes 121 and 122, after laminating, the internal electrodes may be cut out to be exposed to the fifth and sixth surfaces 5 and 6 of the body, a single dielectric layer or two or more dielectric layers may be laminated on both side surfaces of the capacitance forming portion Ac in the width direction, thereby forming the margin portions 114 and 115.

The width of the margin portion 114 and 115 may not be limited to any particular example. However, the average width of the margin portions 114 and 115 may be 15 µm or less to easily obtain miniaturization and high capacitance of the multilayer electronic component.

The average width of the margin portion 114 and 115 may refer to the average size in the third direction of the margin portion 114 and 115, and may be a value obtained by averaging the size of the margin portion 114 and 115 in the third direction measured at 5 points at an equal distance on the side of the capacitance forming portion Ac.

The internal electrodes 121 and 122 may be disposed alternately with the dielectric layer 111.

The internal electrodes 121 and 122 may include first and second internal electrodes 121 and 122. The first and second internal electrodes 121 and 122 may be disposed alternately to oppose each other with the dielectric layer 111 included in the body 110 therebetween, and may be exposed to the third and fourth surfaces 3 and 4 of the body 110, respectively.

Referring to FIG. 2, the first internal electrode 121 may be spaced apart from the fourth surface 4 and may be exposed through the third surface 3, and the second internal electrode 122 may be spaced apart from the third surface 3 and may be exposed through the fourth surface 4.

In this case, the first and second internal electrodes 121 and 122 may be electrically separated from each other by the dielectric layer 111 disposed therebetween.

The material forming the internal electrodes 121 and 122 is not limited to any particular example, and a material having excellent electrical conductivity may be used. The internal electrodes 121 and 122 may include one or more of nickel (Ni), copper (Cu), palladium (Pd), silver (Ag), gold (Au), platinum (Pt), tin (Sn), tungsten (W), titanium (Ti) and alloys thereof.

The average thickness te of the internal electrodes 121 and 122 may not be limited to any particular example.

For example, to implement miniaturization and high capacitance of the multilayer electronic component 100, the average thickness te of the internal electrodes 121 and 122 may be 0.35 µm or less, and in order to ensure reliability of the multilayer electronic component 100 under high temperature and high voltage, the average thickness te of the internal electrodes 121 and 122 may be 3.0 µm or more.

The average thickness te of the internal electrodes 121 and 122 may be measured by scanning the cross-sections of the body 110 in the first and second directions using a scanning electron microscope (SEM) at 10,000 magnification. More specifically, the average thickness te of the internal electrodes 121 and 122 may be measured by measuring the thickness at 30 points at an equal distance in the second direction of one of the internal electrodes. The 30 points at equal distance may be designated in the capacitance forming portion Ac. The measuring the average value may be performed on 10 internal electrodes 121 and 122, and the average thickness te of the internal electrodes 121 and 122 may be further generalized.

The external electrodes 130 and 140 may be disposed on the body 110.

The external electrodes 130 and 140 may include a first external electrode 130 in contact with a third surface 3 of the body 110 and a second external electrode 140 in contact with a fourth surface 4.

In the embodiment, the multilayer electronic component 100 may have two external electrodes 130 and 140, but the number and shape of the external electrodes 130 and 140 may be varied depending on the internal electrodes 121 and 122 or for other purposes.

The external electrodes 130 and 140 may be formed of any material having electrical conductivity, such as metal, and a specific material may be determined in consideration of electrical properties and structural stability, and the external electrodes 130 and 140 may have a multilayer structure.

For example, the external electrodes 130 and 140 may include electrode layers disposed on the body 110 and plating layers disposed on the electrode layers.

For a more specific example of the electrode layers, the electrode layers may be fired electrodes including a first conductive metal and glass, or a resin-based electrode including a conductive metal and resin.

Also, the electrode layers may have a form in which a fired electrode and a resin-based electrode are formed in order on the body. Also, the electrode layers may be formed by transferring a sheet including a conductive metal to a body or by transferring a sheet including a conductive metal to a fired electrode.

A material having excellent electrical conductivity may be used as the conductive metal included in the electrode layers. For example, the conductive metal may be one or more of nickel (Ni), copper (Cu), and alloys thereof, and may be copper (Cu) to improve adhesion to the body, preferably.

The plating layer may improve mounting properties. The type of the plating layer is not limited to any particular example, and may be a plating layer including one or more of Ni, Sn, Pd, and alloys thereof, and may be formed as a plurality of layers.

For a more specific example of the plating layers, the plating layers may be Ni plating layers or Sn plating layers, an Ni plating layer and an Sn plating layer may be formed in order on the electrode layers, and an Sn plating layer, an Ni plating layer and an Sn plating layer may be formed in order. Also, the plating layers may include a plurality of Ni plating layers and/or a plurality of Sn plating layers.

### Method of manufacturing multilayer electronic component

FIG. 10 is an image of a second grain selected from the image according to FIG. 7.

In the description below, a method for manufacturing a multilayer electronic component 100 according to an embodiment is described in detail.

However, the method of manufacturing a multilayer electronic component 100 according to an embodiment described above is not limited to the manufacturing method described below. Also, the descriptions overlapping the above descriptions may not be provided.

### S1: Preparing slurry using dielectric powder

The dielectric powder may include a component the same as the first component represented as (Ca₁₋ₓSrₓ) (Zr_{1-y}Ti_{y})O₃ (0 ≤ x ≤ 1.0).

The starting material of the dielectric powder may be one or more of CaCO₃, SrCO₃, ZrO₂, and TiO₂, and the Ti fraction of the dielectric powder may be determined according to a mixing ratio of the starting materials.

To distinguish from (Ca₁₋ₓSrₓ) (Zr_{1-y}Ti_{y})O₃, which is the composition of the dielectric layer 111 after firing, the composition of the dielectric powder may be represented as (Ca₁₋ₐSrₐ) (Zr_{1-b}Ti_{b})O₃ (0 ≤ a ≤ 1.0, 0 ≤ b ≤ 1.0), and the Ti fraction of the dielectric powder may be defined as b.

In an embodiment, the composition of the dielectric powder may include two or more powders having different Ti fractions, and by adjusting the input ratio of the two or more powders having different Ti fractions, the area fraction of the first grain G1 and the second grain G2 of the dielectric layer 111 may be adjusted after firing.

In an embodiment, the dielectric powder may include a first powder satisfying 0 ≤ b < 0.5 and a second powder satisfying 0.5 ≤ b ≤ 1, and the first powder may increase the ratio of the Zr-rich CSZT composition, and the second powder may increase the ratio of the Ti-rich CSZT composition.

In addition to the same component as the first component, the dielectric powder may further include one or more of an additive, an organic solvent, a binder, and a dispersant.

Specifically, in an embodiment, the dielectric powder may further include a first additive, which is one or more of an oxide and a carbonate of a valence variable acceptor element.

The valence variable acceptor element may be one or more of Mn, V, Cr, Fe, Ni, Co, Cu and Zn, and the first additive element may lower the firing temperature and may improve the high-temperature withstand voltage of the multilayer electronic component 100.

The content of the first additive may be 0.20 or more and 4.00 moles or less based on 100 moles of the first component, but an embodiment thereof is not limited thereto, and after firing, the content of the first additive element may satisfy 0.20 moles or more and 4.00 moles or less based on 100 moles of the first component.

In an embodiment, the dielectric powder may further include a second additive, which is one or more of oxides and carbonates of a rare earth element.

The rare earth element may be one or more of Y, Dy, Ho, La, Ce, Nd, Sm, Gd, Er, Tb and Yb, and the second additive element may prevent degradation of reliability of the multilayer electronic component 100, may implement a sufficient dielectric constant, and may further improve high-temperature (200 °C) withstand voltage properties.

The content of the second additive may be 0 moles or more and 2.00 moles or less based on 100 moles of the first component, but an embodiment thereof is not limited thereto, and after firing, the content of the second additive element may satisfy 0 moles or more and 4.00 moles or less based on 100 moles of the first component.

In an embodiment, the dielectric powder may further include a third additive, which is one or more of an oxide of Si, a carbonate of Si, and a glass including Si.

Si may be added to the dielectric composition forming the dielectric layer 111 in the form of an oxide, a carbonate, or a glass and may lower the sintering temperature of the dielectric layer 111 or may facilitate the sintering properties.

The content of the third additive may be 1.00 moles or more and 4.00 moles or less based on 100 moles of the first component, but an embodiment thereof is not limited thereto, and after firing, the content of the third additive element may satisfy 1.00 moles or more and 4.00 moles or less based on 100 moles of the first component.

The slurry may be mixed and dispersed using a zirconia ball, and may be formed by mixing a dispersant such as ethanol and toluene with a binder and ball milling for a predetermined period of time.

### S2: Forming ceramic green sheet using slurry

The ceramic green sheet may be manufactured using a doctor blade coater using the prepared slurry.

The thickness of the formed ceramic green sheet is not limited to any particular example and may be determined by considering the thickness of the dielectric layer 111 and the sintering shrinkage.

### S3: Printing conductive paste for internal electrode on ceramic green sheet and forming laminate by performing lamination

The conductive paste for an internal electrode may be printed on the ceramic green sheet.

The conductive paste for the internal electrode may include one or more of nickel (Ni), copper (Cu), palladium (Pd), silver (Ag), gold (Au), platinum (Pt), tin (Sn), tungsten (W), titanium (Ti) and alloys thereof.

As the method of printing the conductive paste for the internal electrode, a screen printing method or a gravure printing method may be used, and an embodiment thereof is not limited thereto.

The ceramic green sheet and the conductive paste for the internal electrode may be laminated, and the laminate may be formed by pressing and compressing in the direction of lamination. Accordingly, a laminate in which an internal electrode pattern is formed may be formed, and a chip may be formed by cutting each region corresponding to a multilayer electronic component.

In this case, one end of the internal electrode may be cut out so as to be alternately exposed through the side surface oriented in the second direction perpendicular to the direction of lamination.

### S4: Forming body including dielectric layer and internal electrode by firing laminate

Thereafter, by firing the cut-out laminate, a body 110 including a dielectric layer 111 and internal electrodes 121 and 122 may be formed.

When the cut-out laminate is fired, pre-sintering may be performed in a reducing atmosphere. The firing process may be performed by adjusting the temperature and firing time, or the like.

The firing process may further include one or more of pre-sintering before the main firing process and the reoxidation process after the main firing process.

### S5: Forming external electrodes on body

After the forming the body 110, external electrodes 130 and 140 may be formed on the body 110.

The method of forming external electrodes 130 and 140 is not limited to any particular example. For example, the electrode layer which may be included in the external electrodes 130 and 140 may be formed using a method of dipping in a paste including a conductive metal and glass, or by transferring a sheet including a conductive metal. Also, the external electrodes may be formed using a paste including a conductive metal and resin, or using an atomic layer deposition (ALD) method, a molecular layer deposition (MLD) method, a chemical vapor deposition (CVD) method, a sputtering method, or the like.

Also, when the plating layer is disposed on the electrode layer, the plating layer may be formed using a method such as electrolytic plating or electroless plating.

In the description below, the composition of the first component, and the first to third additives were adjusted for each experimental example, and the area fraction of the first grain and the second grain, the room-temperature capacitance, the dielectric loss, the change in capacitance depending on the temperature, and the high-temperature (200 °C) withstand voltage properties were measured and evaluated, and were presented as experimental example 1 to experimental example 2.

The first powder and the second powder including the first component represented as (Ca₁₋ₓSrₓ) (Zr_{1-y}Ti_{y})O₃ were prepared according to the composition ratio specified in each Test No. in the table described below, each additive MnO₂, V₂O₅, Y₂O₃, Dy₂O₃, and SiO₂ were weighed, the raw powder including first powder, second powder, and additive powder (in experimental example 1, the mixing mol ratio of the second powder was 0) was mixed with zirconia balls as a mixing/dispersing medium, ethanol/toluene, a dispersant, and a binder were mixed therein, and ball milling was performed for 20 hours.

The prepared slurry was formed into a molding sheet having a thickness of 5.0 µm and 10-13 µm using a doctor blade-type coater.

Ni internal electrode was printed on the molding sheet. The upper and lower covers were manufactured by laminating 25 layers of cover sheets (the thickness of 10-13 µm), and the bar was manufactured by pressing and laminating 21 layers of printed sheets. The press bar was cut into chips measuring 3.2 mm X 1.6 mm using a cutter.

The manufactured MLCC chip of size 3216 was pre-sintered, fired at 1230 - 1270 °C for 2 hours in a reducing atmosphere of 1% H₂/99% N₂ (H₂O/H₂/N₂ atmosphere), and heat-treated at 1000 °C for 3 hours in N₂ atmosphere.

By performing a termination process and electrode-firing using Cu paste on the chip fired as described above, the external electrode was completed.

The room-temperature capacitance and dielectric loss were measured using an LCR meter at 1 kHz, AC 0.5 V/µm. The dielectric constant of the MLCC chip dielectric was calculated from the capacitance, the dielectric thickness of the MLCC chip, the internal electrode area, and the number of laminations. The room-temperature insulation resistance was measured by obtaining 10 samples, applying DC 10 V/µm, and after 60 seconds, the average value was obtained.

The changes in capacitance depending on temperature was measured in the temperature range of -55 °C to 150 °C. 10 samples were taken, the changes were measured, and the average value was obtained.

In the high-temperature IR step-up experiment, resistance degradation behavior was measured while increasing the voltage process by 5 V/µm at 200 °C. Each process took 10 minutes, and the resistance value was measured at 5 second intervals. 10 samples were taken, and the average value was obtained.

From the high-temperature IR step-up experiment, the high-temperature (200 °C) withstand voltage was derived. This indicates the voltage at which the insulation resistance (IR) withstands 105 Ω or more when the voltage step DC 5 V/µm were applied for 10 minutes at 200 °C and the voltage step was continuously increased on a 3216-size chip having a 20-layer dielectric of 3.2 µm thickness after firing. Tables 2, 4, 6, 8, and 10 list properties of the prototype chips corresponding to the compositions specified in tables 1, 3, 5, 7, and 9, respectively.

The distinction between the first grain and the second grain and the area fraction of the first grain and the area fraction of the second grain were measured in the same manner as described above.

### (Experimental example 1)

**[Table 1]**

| Test No. | First component Ca (Zr_{1-y}Ti_{y}) | | Mixed mol ratio of first powder : second powder | | First powder + second powder | Number of moles of each additive per 100 mol of first component Ca (Zr_{1-y}Ti_{y}) | | | | |
|---|---|---|---|---|---|---|---|---|---|---|
| | First powder Zr-rich CZT (CZ) | Second powder Ti-rich CZT (CT) | | | | First additive | | Second additive | | Third additive |
| | Ti content (y) | Ti content (y) | First powder ratio | Second powder ratio | Ti content (at%) | MnO₂ | V₂O₅ | Y₂O₃ | DY₂O₃ | SiO₂ |
| 1 | 0.000 | 1.000 | 1.000 | 0.000 | 0.000 | 2.00 | 0.00 | 1.00 | 0.00 | 2.00 |
| 2 | 0.030 | 1.000 | 1.000 | 0.000 | 0.030 | 2.00 | 0.00 | 1.00 | 0.00 | 2.00 |
| 3 | 0.040 | 1.000 | 1.000 | 0.000 | 0.040 | 2.00 | 0.00 | 1.00 | 0.00 | 2.00 |
| 4 | 0.050 | 1.000 | 1.000 | 0.000 | 0.050 | 2.00 | 0.00 | 1.00 | 0.00 | 2.00 |
| 5 | 0.100 | 1.000 | 1.000 | 0.000 | 0.100 | 2.00 | 0.00 | 1.00 | 0.00 | 2.00 |
| 6 | 0.200 | 1.000 | 1.000 | 0.000 | 0.200 | 2.00 | 0.00 | 1.00 | 0.00 | 2.00 |

**[Table 2]**

| Test No. | Ni-MLCC Proto-type Sample properties (dielectric constant/DF measurement condition: AC 0.5 V/µm, 1 kHz, room-temperature resistivity: DC 10 V/µm) | | | | | | | | | |
|---|---|---|---|---|---|---|---|---|---|---|
| | First grain: grain having Ti content 5.0 at% or less, second grain: Ti content 60 at% or more grain (STEM/EDS analysis applied) | | | | | | | | | |
| | First grain area ratio (%) 100-a | Second grain area ratio (%) a | Room-temperature dielectric constant | DF (%) | RC (ΩF) | TCC (%) (-55 °C) | TCC (%) (150 °C) | TCC (ppm/°C) C0G presence | High-temperature (200 °C) withstand voltage (V/µm) * | Properties determination |
| 1 | 100.0% | 0.0% | 30 | <0.1% | 2358 | 0.0% | 0.0% | O | 95 | O |
| 2 | 100.0% | 0.0% | 33 | <0.1% | 2845 | 0.0% | 0.0% | O | 85 | O |
| 3 | 100.0% | 0.0% | 36 | <0.1% | 2662 | 0.0% | 0.0% | O | 85 | O |
| 4 | 100.0% | 0.0% | 38 | <0.1% | 2745 | 0.0% | 0.0% | O | 80 | O |
| 5 | 100.0% | 0.0% | 41 | <0.1% | 2458 | 1.1% | -1.9% | X | 75 | X |
| 6 | 100.0% | 0.0% | 60 | <0.1% | 3011 | 2.5% | -2.4% | X | 70 | X |

Test Nos. 1 to 6 represent experimental examples according to the Ti content y of the first powder, while the mixing ratio of the first powder was 100% and the sum of the content of the first additive element (Mn, V), the sum of the content of the second additive element (Y, Dy), and the sum of the content of the third additive element (Si) were constant based on 100 mol of the first component.

Test Nos. 1 to 6 in Table 2 represent electrical properties of the samples corresponding to the experimental examples, and since the mixing ratio of the second powder was 0 and the second grain was not formed, the Ti fraction of the first powder may be determined to be the same value as the Ti fraction of the first grain after firing.

As the Ti content y of the first powder increased, the room-temperature dielectric constant increased and the rate of change of capacitance relative to temperature (TCC) increased. The C0G properties were satisfied up to a Ti content of 5 at% (y = 0.05) (Test No. 4), and 10 at% (y = 0.1), exceeding this content deviated from the C0G specification (Test No. 5).

Accordingly, in the multilayer electronic component including a composite of grains including the first grain G1 and the second grain G2, it may be confirmed that the minimum condition for implementing C0G properties satisfying the TCC of -30 ppm/°C to +30 ppm/°C in the operating temperature range of -55 °C to 125 °C may be the condition in which the Ti fraction y of the first grain G1 satisfies 0 ≤ y ≤ 0.050.

**[Table 3]**

| Test No. | First component Ca (Zr_{1-y}Ti_{y}) | | First powder: second powder mixed mol ratio | First powder + second powder | Number of moles of each additive per 100 moles of first component Ca (Zr_{1-y}Ti_{y}) | | | | | |
|---|---|---|---|---|---|---|---|---|---|---|
| | First powder Zr-rich | Second powder Ti-rich | | | First additive | | Second additive | | Third additive | |
| | CZT (CZ) | CZT (CT) | | | | | | | | |
| | Ti content (y) | Ti content (y) | First powder ratio | Second powder ratio | Ti content (at%) | MnO₂ | V₂O₅ | Y₂O₃ | DY₂O₃ | SiO₂ |
| 1 | 0.000 | 1.000 | 1.000 | 0.000 | 0.000 | 0.15 | 0.20 | 2.00 | 0.75 | 2.00 |
| 7 | 0.000 | 1.000 | 0.970 | 0.030 | 0.030 | 0.15 | 0.20 | 2.00 | 0.75 | 2.00 |
| 8 | 0.000 | 1.000 | 0.960 | 0.040 | 0.040 | 0.15 | 0.20 | 2.00 | 0.75 | 2.00 |
| 9 | 0.000 | 1.000 | 0.950 | 0.050 | 0.050 | 0.15 | 0.20 | 2.00 | 0.75 | 2.00 |
| 10 | 0.000 | 1.000 | 0.900 | 0.100 | 0.100 | 0.15 | 0.20 | 2.00 | 0.75 | 2.00 |
| 11 | 0.000 | 1.000 | 0.800 | 0.200 | 0.200 | 0.15 | 0.20 | 2.00 | 0.75 | 2.00 |
| 12 | 0.000 | 1.000 | 0.700 | 0.300 | 0.300 | 0.15 | 0.20 | 2.00 | 0.75 | 2.00 |
| 13 | 0.000 | 1.000 | 0.600 | 0.400 | 0.400 | 0.15 | 0.20 | 2.00 | 0.75 | 2.00 |
| 14 | 0.000 | 1.000 | 0.500 | 0.500 | 0.500 | 0.15 | 0.20 | 2.00 | 0.75 | 2.00 |
| 15 | 0.000 | 1.000 | 0.400 | 0.600 | 0.600 | 0.15 | 0.20 | 2.00 | 0.75 | 2.00 |
| 16 | 0.000 | 1.000 | 0.300 | 0.700 | 0.700 | 0.15 | 0.20 | 2.00 | 0.75 | 2.00 |
| 17 | 0.000 | 1.000 | 0.200 | 0.800 | 0.800 | 0.15 | 0.20 | 2.00 | 0.75 | 2.00 |
| 18 | 0.000 | 1.000 | 0.100 | 0.900 | 0.900 | 0.15 | 0.20 | 2.00 | 0.75 | 2.00 |
| 19 | 0.000 | 1.000 | 0.000 | 1.000 | 1.000 | 0.15 | 0.20 | 2.00 | 0.75 | 2.00 |

**[Table 4]**

| Test No. | Ni-MLCC Proto-type Sample properties (dielectric constant/DF measurement condition: AC 0.5 V/µm, 1 kHz, room-temperature resistivity: DC 10 V/µm) | | | | | | | | | |
|---|---|---|---|---|---|---|---|---|---|---|
| | First grain: grain having Ti content 5.0 at% or less, second grain: Ti content 60 at% or more grain (STEM/EDS analysis applied) | | | | | | | | | |
| | First grain area ratio (%) 100-a | Second grain area ratio (%) a | Room-temperature dielectric constant | DF (%) | RC (ΩF) | TCC (%) (-55 °C) | TCC (%) (150 °C) | TCC (ppm/°C) C0G presence | High-temperature (200 °C) withstand voltage (V/µm) * | Properties determination |
| 1 | 100.0% | 0.0% | 30 | <0.1% | 2412 | 0.0% | 0.0% | O | 95 | O |
| 7 | 97.8% | 1.2% | 33 | <0.1% | 2621 | 0.0% | 0.0% | O | 90 | O |
| 8 | 96.9% | 3.1% | 36 | <0.1% | 2658 | 0.0% | 0.0% | O | 90 | O |
| 9 | 95.5% | 4.5% | 38 | <0.1% | 2713 | 0.0% | 0.0% | O | 85 | O |
| 10 | 90.8% | 9.2% | 41 | <0.1% | 2485 | 1.1% | -1.9% | X | 85 | O |
| 11 | 81.5% | 18.5% | 50 | <0.1% | 2966 | 2.5% | -2.4% | X | 85 | O |
| 12 | 72.4% | 27.6% | 70 | <0.1% | 3364 | 4.5% | -4.4% | X | 80 | O |
| 13 | 63.1% | 36.9% | 95 | <0.1% | 4052 | 7.3% | -6.8% | X | 75 | O |
| 14 | 50.6% | 49.4% | 112 | <0.1% | 3842 | 10.5% | -9.5% | X | 70 | O |
| 15 | 38.8% | 61.2% | 129 | <0.1% | 3711 | 12.4% | -11.1% | X | 65 | O |
| 16 | 28.5% | 71.5% | 155 | <0.1% | 1964 | 13.9% | -12.9% | X | 60 | O |
| 17 | 17.2% | 82.8% | 185 | <0.1% | 1123 | 14.8% | -13.9% | X | 55 | O |
| 18 | 8.6% | 91.4% | 209 | <0.1% | 572 | 20.0% | -16.4% | X | 48 | X |
| 19 | 0.0% | 100.0% | 230 | <0.1% | 204 | 21.5% | -17.0% | X | 45 | X |

Test Nos. 1, 7 to 19 in Table 3 list embodiments according to the increase in the ratio of the second powder in the composite formed by mixing the first powder having Ti content y of 0 and the second powder having Ti content of 100 at% (y=1.0).

Test Nos. 1, 7 to 19 in Table 4 list electrical properties of the samples corresponding to these embodiments.

Here, the sum of the content of the first additive element (Mn, V), the sum of the content of the second additive element (Y, Dy), and the sum of the content of the third additive element (Si) based on 100 mol of the first component were constant.

According to Table 3 and Table 4, as the ratio of the second powder increased from 0 (Test No. 1) to 0.8 (Test No. 17), while the ratio of the second grain increased similarly, the dielectric constant increased from 30 to 185, and the high-temperature (200 °C) withstand voltage decreased from 95 to 55 V/µm. When the ratio of the second powder became 0.9, the high-temperature withstand voltage became 48 V/µm, which may not satisfy the target property of the embodiment, 50 V/µm or more. Accordingly, the ratio range of the second powder which may implement the dielectric constant of 30 or more and 200 or less and the high-temperature withstand voltage of 50 V/µm or more, which are the target properties of the embodiment, may be 0 to 0.8, and in this case, the area ratio range a of the second grain may be 0 ≤ a ≤ 0.828.

That is, as in an embodiment, when the ratio of the area of the second grain to the total area of the first grain and the second grain was 0.828 or less, the dielectric constant may be assured and the high-temperature (200 °C) withstand voltage properties may improve.

**[Table 5]**

| Test No. | First component Ca (Zr_{1-y}Ti_{y}) | | First powder : second powder mixed mol ratio | | First powder + second powder | Number of moles of each additive per 100 moles of first component Ca (Zr_{1-y}Ti_{y}) | | | | |
|---|---|---|---|---|---|---|---|---|---|---|
| | First powder Zr-rich CZT (CZ) | 1-2 component Ti-rich CZT (CT) | | | | First additive | | Second additive | | Third additive |
| | Ti content (y) | Ti content (y) | First powder ratio | Second powder ratio | Ti content (at%) | MnO₂ | V₂O₅ | Y₂O₃ | DY₂O₃ | SiO₂ |
| 1 | 0.000 | 0.800 | 1.000 | 0.000 | 0.000 | 0.15 | 0.20 | 2.00 | 0.75 | 2.00 |
| 20 | 0.000 | 0.800 | 0.962 | 0.038 | 0.030 | 0.15 | 0.20 | 2.00 | 0.75 | 2.00 |
| 21 | 0.000 | 0.800 | 0.950 | 0.050 | 0.040 | 0.15 | 0.20 | 2.00 | 0.75 | 2.00 |
| 22 | 0.000 | 0.800 | 0.938 | 0.062 | 0.050 | 0.15 | 0.20 | 2.00 | 0.75 | 2.00 |
| 23 | 0.000 | 0.800 | 0.875 | 0.125 | 0.100 | 0.15 | 0.20 | 2.00 | 0.75 | 2.00 |
| 24 | 0.000 | 0.800 | 0.750 | 0.250 | 0.200 | 0.15 | 0.20 | 2.00 | 0.75 | 2.00 |
| 25 | 0.000 | 0.800 | 0.625 | 0.375 | 0.300 | 0.15 | 0.20 | 2.00 | 0.75 | 2.00 |
| 26 | 0.000 | 0.800 | 0.500 | 0.500 | 0.400 | 0.15 | 0.20 | 2.00 | 0.75 | 2.00 |
| 27 | 0.000 | 0.800 | 0.375 | 0.625 | 0.500 | 0.15 | 0.20 | 2.00 | 0.75 | 2.00 |
| 28 | 0.000 | 0.800 | 0.250 | 0.750 | 0.600 | 0.15 | 0.20 | 2.00 | 0.75 | 2.00 |
| 29 | 0.000 | 0.800 | 0.125 | 0.875 | 0.700 | 0.15 | 0.20 | 2.00 | 0.75 | 2.00 |
| 30 | 0.000 | 0.800 | 0.000 | 1.000 | 0.800 | 0.15 | 0.20 | 2.00 | 0.75 | 2.00 |

**[Table 6]**

| Test No. | Ni-MLCC Proto-type Sample properties (dielectric constant/DF measurement condition: AC 0.5 V/µm, 1 kHz, room-temperature resistivity: DC 10 V/µm) | | | | | | | | | |
|---|---|---|---|---|---|---|---|---|---|---|
| | First grain: grain having Ti content 5.0 at% or less, second grain: Ti content 60 at% or more grain (STEM/EDS analysis applied) | | | | | | | | | |
| | First grain area ratio (%) 100-a | Second grain area ratio (%) a | Room-temperature dielectric constant | DF (%) | RC (ΩF) | TCC (%) (-55 °C) | TCC (%) (150 °C) | TCC (ppm/°C) C0G presence | High-temperature (200 °C) withstand voltage (V/µm) * | Properties determination |
| 1 | 100.0% | 0.0% | 30 | <0.1% | 2412 | 0.0% | 0.0% | O | 90 | O |
| 20 | 97.0% | 1.7% | 32 | <0.1% | 2621 | 0.0% | 0.0% | O | 85 | O |
| 21 | 95.5% | 4.5% | 35 | <0.1% | 2658 | 0.0% | 0.0% | O | 85 | O |
| 22 | 94.2% | 5.8% | 38 | <0.1% | 2713 | 0.0% | 0.0% | O | 83 | O |
| 23 | 88.1% | 11.9% | 40 | <0.1% | 2485 | 1.1% | -1.9% | X | 83 | O |
| 24 | 76.3% | 23.7% | 51 | <0.1% | 2966 | 2.5% | -2.4% | X | 80 | O |
| 25 | 63.2% | 36.8% | 71 | <0.1% | 3364 | 4.5% | -4.4% | X | 75 | O |
| 26 | 51.0% | 49.0% | 94 | <0.1% | 4052 | 7.3% | -6.8% | X | 70 | O |
| 27 | 37.0% | 63.0% | 110 | <0.1% | 3842 | 10.5% | -9.5% | X | 65 | O |
| 28 | 24.5% | 75.5% | 125 | <0.1% | 3711 | 12.4% | -11.1% | X | 60 | O |
| 29 | 11.8% | 88.2% | 154 | <0.1% | 1964 | 13.9% | -12.9% | X | 55 | O |
| 30 | 0.0% | 100.0% | 183 | <0.1% | 1123 | 14.8% | -13.9% | X | 50 | O |

Test No. 1, 20 to 30 in Table 5 represent embodiments according to the increase in the ratio of the second powder in the composite of the first powder having Ti content y of 0 and the second powder having Ti content of 80 at% (y=0.8), and Test No. 1, 20 to 30 in Table 6 represent the electrical properties of the samples corresponding to these embodiments.

Here, the sum of the content of the first additive element (Mn, V), the sum of the content of the second additive element (Y, Dy), and the sum of the content of the third additive element (Si) based on 100 mol of the first component were constant.

According to Table 5 and Table 6, as the second powder ratio increased from 0 (Test No. 1) to 1.0 (Test No. 30), while the area ratio of the second grain increased similarly, the dielectric constant increased from 30 to 185 and the high-temperature (200 °C) withstand voltage decreased from 95 to 50 V/µm. However, it may be confirmed that the target properties of the embodiment, dielectric constant 30 or more and 200 or less, was implemented, and high-temperature withstand voltage 50 V/µm or more, were satisfied in overall Test Nos.

**[Table 7]**

| Te st No. | First component Ca (Zr_{1-y}Ti_{y}) | | First powder : second powder mixed mol ratio | First powder + second powder | Number of moles of each additive per 100 moles of first component Ca (Zr_{1-y}Ti_{y}) | | | | | |
|---|---|---|---|---|---|---|---|---|---|---|
| | First powde | Secon d | | | First additive | | Second additive | | Third addit | |
| | r Zr-rich CZT (CZ) | powde r Ti-rich CZT (CT) | | | | | | | | ive |
| | Ti conte nt (y) | Ti conte nt (y) | first powder ratio | second powder ratio | Ti content (at%) | MnO₂ | V₂O₅ | Y₂O₃ | DY₂O₃ | SiO₂ |
| 1 | 0.000 | 0.600 | 1.000 | 0.000 | 0.000 | 0.15 | 0.20 | 2.00 | 0.75 | 2.00 |
| 31 | 0.000 | 0.600 | 0.950 | 0.050 | 0.030 | 0.15 | 0.20 | 2.00 | 0.75 | 2.00 |
| 32 | 0.000 | 0.600 | 0.934 | 0.066 | 0.040 | 0.15 | 0.20 | 2.00 | 0.75 | 2.00 |
| 33 | 0.000 | 0.600 | 0.917 | 0.083 | 0.050 | 0.15 | 0.20 | 2.00 | 0.75 | 2.00 |
| 34 | 0.000 | 0.600 | 0.834 | 0.166 | 0.100 | 0.15 | 0.20 | 2.00 | 0.75 | 2.00 |
| 35 | 0.000 | 0.600 | 0.666 | 0.334 | 0.200 | 0.15 | 0.20 | 2.00 | 0.75 | 2.00 |
| 36 | 0.000 | 0.600 | 0.500 | 0.500 | 0.300 | 0.15 | 0.20 | 2.00 | 0.75 | 2.00 |
| 37 | 0.000 | 0.600 | 0.334 | 0.666 | 0.400 | 0.15 | 0.20 | 2.00 | 0.75 | 2.00 |
| 38 | 0.000 | 0.600 | 0.167 | 0.833 | 0.500 | 0.15 | 0.20 | 2.00 | 0.75 | 2.00 |
| 39 | 0.000 | 0.600 | 0.000 | 1.000 | 0.600 | 0.15 | 0.20 | 2.00 | 0.75 | 2.00 |

**[Table 8]**

| Test No. | Ni-MLCC Proto-type Sample properties (dielectric constant/DF measurement condition: AC 0.5 V/µm, 1 kHz, room-temperature resistivity: DC 10 V/µm) | | | | | | | | | |
|---|---|---|---|---|---|---|---|---|---|---|
| | First grain: grain having Ti content 5.0 at% or less, second grain: Ti content 60 at% or more grain (STEM/EDS analysis applied) | | | | | | | | | |
| | First grain area ratio (%) 100-a | Second grain area ratio (%) a | Room-temperature dielectric constant | DF (%) | RC (ΩF) | TCC (%) (-55 °C) | TCC (%) (150 °C) | TCC (ppm/°C) C0G presence | High-temperature (200 °C) withstand voltage (V/µm) * | Properties determination |
| 1 | 100.0% | 0.0% | 30 | <0.1% | 2412 | 0.0% | 0.0% | O | 90 | O |
| 31 | 95.3% | 3.7% | 32 | <0.1% | 2621 | 0.0% | 0.0% | O | 85 | O |
| 32 | 93.8% | 6.2% | 35 | <0.1% | 2658 | 0.0% | 0.0% | O | 85 | O |
| 33 | 92.0% | 8.0% | 38 | <0.1% | 2713 | 0.0% | 0.0% | O | 85 | O |
| 34 | 83.8% | 16.2% | 40 | <0.1% | 2485 | 1.1% | -1.9% | X | 80 | O |
| 35 | 67.0% | 33.0% | 51 | <0.1% | 2966 | 2.5% | -2.4% | X | 75 | O |
| 36 | 51.1% | 48.9% | 71 | <0.1% | 3364 | 4.5% | -4.4% | X | 70 | O |
| 37 | 32.8% | 67.2% | 94 | <0.1% | 4052 | 7.3% | -6.8% | X | 65 | O |
| 38 | 15.9% | 84.1% | 110 | <0.1% | 3842 | 10.5% | -9.5% | X | 60 | O |
| 39 | 0.0% | 100.0% | 125 | <0.1% | 3711 | 12.4% | -11.1% | X | 50 | O |

Test Nos. 1, 31 to 39 in Table 7 represent embodiments according to the increase in the second powder ratio in the composite of the first powder having Ti content y of 0 and the second powder having Ti content of 60 at% (y=0.6), and Test Nos. 1, 31 to 39 in table 8 represent the electrical properties of the samples corresponding to these embodiments.

Here, the sum of the content of the first additive element (Mn, V), the sum of the content of the second additive element (Y, Dy), and the sum of the content of the third additive element (Si) based on 100 mol of the first component were constant.

According to Table 7 and Table 8, as the ratio of the second powder increased from 0 (Test No. 1) to 1.0 (Test No. 39), while the area ratio of the second grain increases similarly, the dielectric constant increased from 30 to 125 and the high-temperature (200 °C) withstand voltage decreased from 95 to 50 V/µm. However, overall embodiments satisfied the target properties of the embodiments, which may be the dielectric constant of 30 or more and 200 or less, and the high-temperature withstand voltage of 50 V/µm or more.

In summary, according to Table 1 to Table 8, it may be confirmed that, for each arbitrary Ti content y of the first grain G1 and the second grain G2, the dielectric layer included a first grain and a second grain including a first component represented as (Ca₁₋ₓSrₓ) (Zr_{1-y}Ti_{y})O₃ (0 ≤ x ≤ 1.0), and when the first grain satisfied 0 ≤ y ≤ 0.050, the second grain satisfied 1 ≥ y ≥ 0.600, and the ratio of the area of the second grain to the total area of the first grain and the second grain satisfied 0.828 or less, an appropriate dielectric constant may be assured and excellent high-temperature (200 °C) withstand voltage properties may be implemented. Specifically, the multilayer electronic component 100 according to an embodiment may satisfy one or more of properties selected from among the condition in which a room-temperature dielectric constant is 200 or less, the condition in which a high-temperature (200 °C) withstand voltage is 50 V/µm or more, and the condition in which a capacitance change satisfies -15% to +15% in an operating temperature range of -55 °C to 150 °C.

Referring to Table 4, it may be confirmed that, when the ratio of the area of the second grain to the total area of the first grain and the second grain satisfied 0.045 or less, the above-described dielectric constant may be sufficiently assured and the high-temperature (200 °C) withstand voltage properties may be implemented, and also the C0G properties satisfying the TCC of -30 ppm/°C to +30 ppm/°C in an operating temperature range of -55 °C to 125 °C may be implemented.

### (Experimental example 2)

**[Table 9]**

| Test No. | First component Ca (Zr_{1-y}Ti_{y}) | | First powder : second powder mixed mol ratio | | First powder + second powder | Number of moles of each additive per 100 moles of first component Ca (Zr_{1-y}Ti_{y}) | | | | |
|---|---|---|---|---|---|---|---|---|---|---|
| | First powder Zr-rich CZT (CZ) | Second powder Ti-rich CZT (CT) | | | | First additive | | Second additive | | Third additive |
| | Ti content (y) | Ti content (y) | First powder ratio | Second powder ratio | Ti content (at%) | MnO₂ | V₂O₅ | Y₂O₃ | DY₂O₃ | SiO₂ |
| 40 | 0.000 | 1.000 | 0.97 | 0.03 | 0.600 | 0.10 | 0.00 | 0.00 | 0.00 | 0.50 |
| 41 | 0.000 | 1.000 | 0.97 | 0.03 | 0.600 | 0.20 | 0.00 | 0.00 | 0.00 | 0.50 |
| 42 | 0.000 | 1.000 | 0.97 | 0.03 | 0.600 | 1.00 | 0.00 | 0.00 | 0.00 | 0.50 |
| 43 | 0.000 | 1.000 | 0.97 | 0.03 | 0.600 | 2.00 | 0.00 | 0.00 | 0.00 | 0.50 |
| 44 | 0.000 | 1.000 | 0.97 | 0.03 | 0.600 | 3.00 | 0.00 | 0.00 | 0.00 | 0.50 |
| 45 | 0.000 | 1.000 | 0.97 | 0.03 | 0.600 | 4.00 | 0.00 | 0.00 | 0.00 | 0.50 |
| 46 | 0.000 | 1.000 | 0.97 | 0.03 | 0.600 | 5.00 | 0.00 | 0.00 | 0.00 | 0.50 |
| 47 | 0.000 | 1.000 | 0.97 | 0.03 | 0.600 | 1.50 | 0.25 | 0.00 | 0.00 | 0.50 |
| 48 | 0.000 | 1.000 | 0.97 | 0.03 | 0.600 | 1.00 | 0.50 | 0.00 | 0.00 | 0.50 |
| 49 | 0.000 | 1.000 | 0.97 | 0.03 | 0.600 | 0.50 | 0.75 | 0.00 | 0.00 | 0.50 |
| 50 | 0.000 | 1.000 | 0.97 | 0.03 | 0.600 | 0.00 | 1.00 | 0.00 | 0.00 | 0.50 |
| 51 | 0.000 | 1.000 | 0.97 | 0.03 | 0.600 | 2.00 | 0.00 | 0.50 | 0.00 | 0.50 |
| 52 | 0.000 | 1.000 | 0.97 | 0.03 | 0.600 | 2.00 | 0.00 | 1.00 | 0.00 | 0.50 |
| 53 | 0.000 | 1.000 | 0.97 | 0.03 | 0.600 | 2.00 | 0.00 | 2.00 | 0.00 | 0.50 |
| 54 | 0.000 | 1.000 | 0.97 | 0.03 | 0.600 | 2.00 | 0.00 | 3.00 | 0.00 | 0.50 |
| 55 | 0.000 | 1.000 | 0.97 | 0.03 | 0.600 | 2.00 | 0.00 | 0.00 | 1.00 | 0.50 |
| 56 | 0.000 | 1.000 | 0.97 | 0.03 | 0.600 | 2.00 | 0.00 | 0.00 | 2.00 | 0.50 |
| 57 | 0.000 | 1.000 | 0.97 | 0.03 | 0.600 | 2.00 | 0.00 | 0.00 | 3.00 | 0.50 |
| 58 | 0.000 | 1.000 | 0.97 | 0.03 | 0.600 | 2.00 | 0.00 | 1.00 | 1.00 | 0.50 |
| 59 | 0.000 | 1.000 | 0.97 | 0.03 | 0.600 | 2.00 | 0.00 | 1.00 | 0.00 | 0.25 |
| 60 | 0.000 | 1.000 | 0.97 | 0.03 | 0.600 | 2.00 | 0.00 | 1.00 | 0.00 | 1.00 |
| 61 | 0.000 | 1.000 | 0.97 | 0.03 | 0.600 | 2.00 | 0.00 | 1.00 | 0.00 | 2.00 |
| 62 | 0.000 | 1.000 | 0.97 | 0.03 | 0.600 | 2.00 | 0.00 | 1.00 | 0.00 | 3.00 |
| 63 | 0.000 | 1.000 | 0.97 | 0.03 | 0.600 | 2.00 | 0.00 | 1.00 | 0.00 | 4.00 |
| 64 | 0.000 | 1.000 | 0.97 | 0.03 | 0.600 | 2.00 | 0.00 | 1.00 | 0.00 | 5.00 |

**[Table 10]**

| Te st No. | Ni-MLCC Proto-type Sample properties (dielectric constant/DF measurement condition: AC 0.2 V/µm, 1 kHz, room-temperature resistivity: DC 10 V/µm) | | | | | | | | | |
|---|---|---|---|---|---|---|---|---|---|---|
| | First grain: Grain having Ti content 5.0 at% or less, second grain: Ti content 60 at% or more grain (STEM/EDS analysis applied) | | | | | | | | | |
| | First grain area ratio (%) 100-a | Second grain area ratio (%) a | Room -temp erat ure diel ectr ic cons tant | DF (%) | RC (ΩF) | TCC (%) (-55 °C ) | TCC (%) (150 °C ) | TCC (%) (200 °C) | High-temperatu re (200 °C) withstand voltage (V/µm) * | Pro per tie s det erm ina tio n |
| 40 | 97.9% | 1.1% | 133 | <0.1% | 2245 | 12.5% | -12.3% | X | 35 | X |
| 41 | 98.0% | 2.0% | 132 | <0.1% | 2658 | 12.6% | -12.5% | X | 55 | O |
| 42 | 98.5% | 1.5% | 131 | <0.1% | 3325 | 12.2% | -12.1% | X | 70 | O |
| 43 | 98.4% | 1.6% | 132 | <0.1% | 4012 | 12.0% | -11.9% | X | 80 | O |
| 44 | 97.6% | 1.4% | 132 | <0.1% | 4012 | 12.0% | -11.9% | X | 80 | O |
| 45 | 97.8% | 1.2% | 130 | <0.1% | 3265 | 11.9% | -11.7% | X | 75 | O |
| 46 | 98.9% | 1.1% | 124 | <0.1% | 1568 | 11.5% | -11.4% | X | 45 | X |
| 47 | 97.7% | 2.3% | 133 | <0.1% | 4003 | 12.4% | -12.0% | X | 80 | O |
| 48 | 97.6% | 1.4% | 135 | <0.1% | 3978 | 12.5% | -12.1% | X | 80 | O |
| 49 | 97.3% | 1.7% | 134 | <0.1% | 3856 | 12.5% | -11.9% | X | 80 | O |
| 50 | 98.7% | 1.3% | 133 | <0.1% | 3652 | 12.6% | -11.9% | X | 75 | O |
| 51 | 98.8% | 1.2% | 131 | <0.1% | 4226 | 12.5% | -12.0% | X | 95 | O |
| 52 | 98.9% | 1.1% | 130 | <0.1% | 4356 | 12.4% | -11.9% | X | 100 | O |
| 53 | 97.4% | 1.6% | 132 | <0.1% | 4471 | 12.2% | -11.5% | X | 80 | O |
| 54 | 97.2% | 1.2% | 129 | <0.1% | 4853 | 12.1% | -11.4% | X | 40 | X |
| 55 | 97.3% | 1.7% | 130 | <0.1% | 4258 | 12.3% | -12.2% | X | 105 | O |
| 56 | 98.3% | 1.7% | 131 | <0.1% | 4126 | 12.5% | -11.3% | X | 80 | O |
| 57 | 98.2% | 1.8% | 130 | <0.1% | 4629 | 12.5% | -11.7% | X | 45 | X |
| 58 | 98.1% | 1.9% | 131 | <0.1% | 4358 | 12.3% | -11.7% | X | 85 | O |
| 59 | 97.2% | 1.8% | 118 | <0.1% | 2569 | 11.8% | -11.7% | X | 45 | X |
| 60 | 98.8% | 1.2% | 132 | <0.1% | 4428 | 12.3% | -11.9% | X | 100 | O |
| 61 | 97.3% | 1.7% | 133 | <0.1% | 4571 | 12.2% | -11.7% | X | 90 | O |
| 62 | 98.6% | 1.4% | 135 | <0.1% | 4396 | 12.4% | -11.8% | X | 85 | O |
| 63 | 97.4% | 1.6% | 124 | <0.1% | 3024 | 12.5% | -11.6% | X | 60 | O |
| 64 | 97.7% | 2.3% | 121 | <0.1% | 2047 | 12.6% | -11.5% | X | 40 | X |

Test Nos. 40 to 46 in Table 9 list embodiments according to the changes in the first additive element Mn content when the first powder and second powder ratios were 0.97 and 0.03, respectively, in a composite of the first powder having Ti content y of 0 and the second powder having Ti content of 100 at% (y=1.0), and the content of the third additive element Si was 0.5 mol based on 100 mol of the first component. Table 10 lists the properties of the prototype according to these embodiments.

When the content of Mn was relatively low as 0.1 mol (0.1 at%) based on 100 mol of the first component (Test No. 40), the high-temperature (200 °C) withstand voltage was lowered to 35 V/µm.

When the Mn content increased by 0.2 mol (0.2 at%) or more, the high-temperature (200 °C) withstand voltage increased to 50 V/µm or more (Test No. 41-45), and when the Mn content was 5 mol (5 at%), which was overly excessive (embodiment 46), a secondary phase was generated, such that the high-temperature (200 °C) withstand voltage was lowered again to less than 50 V/µm.

Accordingly, it may be confirmed that, when the content of the first additive element was 0.20 moles or more and 4.00 moles or less based on 100 moles of the first component, the deterioration of the high-temperature (200 °C) withstand voltage properties may be alleviated.

In Table 9, Test Nos. 47 to 50 represent embodiments when a portion of the first additive MnO₂ was changed to V₂O₅, and when the total content of the first additive element was 2 at% in terms of at%, the properties of the case in which Mn was provided alone and the case in which Mn and V were added together were almost the same.

Test Nos. 51 to 54 in Table 9 represent embodiments according to the change in the second additive element Y content when the ratios of the first powder and the second powder were 0.97 and 0.03, respectively, in the first powder having Ti content y of 0 and the second powder having Ti content of 100 at% (y=1.0), the content of the first additive element Mn was 2 mol (2.0 at%) based on 100 mol of the first component, and the content of the third additive element Si was 0.5 mol (0.5 at%), and Test Nos. 51 to 54 in Table 10 represent the properties of the prototype according to these embodiments.

As the content of Y increases, the high-temperature (200 °C) withstand voltage increased and then decreased. However, when the Y content was 6 mol (6 at% based on at%), overly excessive, the high-temperature (200 °C) withstand voltage decreased to less than 50 V/um due to the formation of secondary phases (Test No. 30).

Accordingly, it may be confirmed that, when the content of the second additive element was 0 moles or more and 4.00 moles or less based on 100 moles of the first component, the deterioration of the high-temperature (200°C) withstand voltage properties may be alleviated.

Test Nos. 55 to 58 in Table 9 represent the embodiment when the second additive Y₂O₃ was changed to Dy₂O₃ or Y₂O₃ and Dy₂O₃ were added together in a composite of the first powder having a Ti content y of 0 and the second powder having a Ti content of 100 at % (y=1.0) when the ratio of the first powder to the second powder was 0.97 and 0.03, respectively, the content of the first additive element Mn was 2 moles (2.0 at%) and the content of the third additive element Si was 0.5 at% based on 100 moles of the first component, and 55 to 58 in Table 10 represent the properties of the prototypes according to these embodiments.

It may be confirmed that, when the entire content of the second additive element was the same based on at%, the properties of Y or Dy alone or when Y and Dy are added together were almost the same, and when the content of the second additive element was 6 mol (6 at%), overly excessive, based on 100 mol of the first component (Test No. 57), the high-temperature (200 °C) withstand voltage was lowered to less than 50 V/um.

Test No. 59 to 64 in Table 9 represent embodiments according to the content of the third additive element Si in the composite of the first powder having Ti content y of 0 and the second powder having Ti content of 100 at% (y=1.0) when the ratio of the first powder and the second powder were 0.97 and 0.03, respectively, the content of the first additive element Mn was 2.0 moles and the content of the second additive element Y was 2.0 moles based on 100 mol of the first component. Test Nos. 59 to 64 in Table 10 represent the properties of the prototypes according to these embodiments.

When the Si content was relatively small, such as 0.25 at % (Test No. 35), the high-temperature (200 °C) withstand voltage was lowered to less than 50 V/µm due to low density. As the Si content increased, the high-temperature (200 °C) withstand voltage tends to increase and then decrease. However, when the Si content was overly excessive at 5 at % (Test No. 64), the high-temperature (200 °C) withstand voltage decreased to less than 50 V/µm due to the generation of a secondary phase.

Since the entirety of target properties in the embodiment may be implemented simultaneously in the range of SiO₂ content of 0.5 - 4.0 at %, the appropriate content of the third additive SiO₂ may be described as 0.5 - 4.0 at %.

Accordingly, it may be confirmed that, when the content of the third additive element was 1.00 moles or more and 4.00 moles or less based on 100 moles of the first component, deterioration of the high-temperature (200 °C) withstand voltage properties may be alleviated.

According to the aforementioned embodiments, the dielectric layer including the first component represented as (Ca₁₋ₓSrₓ) (Zr_{1-y}Ti_{y})O₃ (0 ≤ x ≤ 1.0) may implement improved withstand voltage and reliability properties under the same dielectric constant condition by including the first grain and the second grain having different Ti contents.

Also, the dielectric layer including the first component represented by (Ca₁₋ₓSrₓ) (Zr_{1-y}Ti_{y})O₃ (0 ≤ x ≤ 1.0) may include the first grain and the second grain having different Ti contents, and by adjusting the area fraction of the first grain and the second grain, improved withstand voltage and reliability properties may be implemented under the same dielectric constant condition.

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and internal electrodes; and
external electrodes disposed on the body and connected to the internal electrodes,
wherein the dielectric layer includes a first grain and a second grain each including a first component represented as (Ca₁₋ₓSrₓ) (Zr_{1-y}Ti_{y})O₃ (0 ≤ x ≤ 1.0),
wherein the first component included in the first grain satisfies 0 ≤ y ≤ 0.050, and
wherein the first component included in the second grain satisfies 1 ≥ y ≥ 0.600.

2. The multilayer electronic component of claim 1, wherein a ratio of an area of the second grain to a total area of the first grain and the second grain is 0.828 or less.

3. The multilayer electronic component of claim 1, wherein a ratio of an area of the second grain to a total area of the first grain and the second grain is 0.045 or less.

4. The multilayer electronic component of claim **1,**
wherein the dielectric layer further includes a first additive element, which is a valence variable acceptor element,
wherein the valence variable acceptor element is one or more of **Mn, V, Cr, Fe, Ni, Co,** Cu and **Zn,** and
wherein a content of the first additive element is in a range from **0.20** moles to **4.00** moles based on 100 moles of the first component.

5. The multilayer electronic component of claim **1,**
wherein the dielectric layer further includes a second additive element, which is a rare earth element,
wherein the rare earth element is one or more of **Y, Dy, Ho, La, Ce, Nd, Sm, Gd, Er,** Tb and **Yb,** and
wherein a content of the second additive element is in a range from 0 moles to **4.00** moles based on 100 moles of the first component.

6. The multilayer electronic component of claim **1,**
wherein the dielectric layer further includes Si as a third additive element, and
wherein a content of the third additive element is in a range from 1.00 moles to 4.00 moles based on 100 moles of the first component.

7. The multilayer electronic component of claim 1, wherein the first component satisfies x=0.
